# EUROPEAN PATENT SPECIFICATION

(11) **EP 3 385 864 B1**
(45) Date of publication and mention of the grant of the patent: **03.01.2024**
(21) Application number: 16869893.4
(22) Date of filing: 21.11.2016
(51) Int. Cl.: G06F 16/22

(54) **METHOD AND DEVICE FOR ESTABLISHING INDEX**
VERFAHREN UND VORRICHTUNG ZUR FESTLEGUNG EINES INDEX
PROCÉDÉ ET DISPOSITIF D'ÉTABLISSEMENT D'UN INDEX

(30) Priority: 01.12.2015 CN 201510868254
(43) Date of publication of application: 10.10.2018
(73) Proprietor: Alibaba Group Holding Limited, Grand Cayman (KY)
(72) Inventor: ZHENG, Bowen, Hangzhou Zhejiang 311121 (CN); PAN, Yue, Hangzhou Zhejiang 311121 (CN); WEI, Chuangxian, Hangzhou Zhejiang 311121 (CN)
(74) Representative: Finnegan Europe LLP
(86) International application number: PCT/CN2016/106581
(87) International publication number: WO 2017/092583

(56) References cited:
- CN-A- 103 390 066
- CN-A- 103 810 212
- CN-A- 105 045 851
- US-A1- 2006 212 264
- US-A1- 2010 250 504
- US-B1- 7 640 244
- Anonymous: "Database index - Wikipedia", , 20 October 2015 (2015-10-20), XP093022296, Retrieved from the Internet: URL:https://en.wikipedia.org/w/index.php?t itle=Database_index&oldid=686651483 [retrieved on 2023-02-09]

## Description

### Technical Field

The present invention relates to the field of communications technologies, and in particular, to an index establishment method. The present application further relates to an index establishment device.

### Background Art

An index is a structure for sorting values in one or more columns in a database table. Specific information in the database table can be rapidly accessed by using an index. Indexes provide pointers pointing to data values stored in specified columns in the table. These pointers are then sorted according to a sorting order specified by a user. When an index needs to be used in a database, the index is searched first to find a specific value, and a row including the value is then found according to a pointer.

With the continuous development of Internet technology, a massive amount of data is generated from people's daily activities on the Internet. How to rapidly find required data from the stored massive amount of data becomes a major concern for technical personnel. A user needs to specify an index type for an index in a conventional database. However, for the same index type, different lengths of query time are needed for different types of data. As a result, if an index type is inappropriately set, a user needs to spend an excessively long period of time to make a query in a database, resulting in a poor user experience.

During the implementation of the present application, the inventor finds that the prior art has the following defects:

### (1) Existing index types are unvaried and lead to poor query performance in some scenarios.

Index types of conventional data are relatively unvaried and are dominated by B-Tree indexes. B-Tree indexes are not suitable for all data features. For example, search speeds are very slow for the Key-Value mode. In Structured Query Language (SQL) with joins, multiple searches will be performed for one SQL. The performance of join SQL is severely affected if a B-Tree is used for searching.

### (2) Logs are manually analyzed to optimize indexes, resulting in poor operability and maintainability.

Indexes bring very high maintenance costs for a conventional database when there is a large amount of data. Consequently, user access logs need to be viewed every night to decide which columns require new indexes, which columns do not need indexes, and which columns are to be combined to establish a combined index. Such automatic adjustment of index types by using history statistics (history-based optimization, HBO) is completely manual, resulting in very poor operability and maintainability.

As can be seen, how to combine the usage of a database to establish suitable indexes for columns in the database to improve data retrieval efficiency and save operation and maintenance resources becomes a technical problem that urgently needs to be resolved by people skilled in the art.

US 2010/0250504 discloses dynamic integrated database index management.

US 2006/0212264 discloses an apparatus and method for monitoring usage components in a database index.

### Summary of the Invention

The present invention provides an index establishment method according to claim 1. An index establishment procedure is optimized to improve data retrieval efficiency and at the same time reduce labor consumption.

Preferably, the method further includes:
determining, after the time threshold and according to index use status information of the column within the time threshold, whether an index needs to be established for the column if it is determined that an index does not need to be established for the column.

The step of determining, according to the index status information of a column in a database within a preset time threshold, whether an index needs to be established for the column is specifically:
acquiring the index status information of the column within the time threshold;
determining, according to the index status information, whether an index is used for the column within the time threshold, and when the determination result is yes, determining whether the number of times an index for the column is used within the time threshold is not less than a preset number-of-times threshold; and
determining that an index does not need to be established for the column if an index is not used for the column within the time threshold or the number of times an index for the column is used within the time threshold is less than the number-of-times threshold; or
determining that an index needs to be established for the column if the number of times an index for the column is used within the time threshold is not less than the number-of-times threshold.

The index types at least include a B-Tree index, a Hash index, and a Bitmap index, and the step of determining an index type according to the data information of the column is specifically:
determining that the index type is a B-Tree index if the column is a continuous value type;
determining that the index type is a Hash index if a Join occurs in the column; and
determining that the index type is an inverted index if the number of words in the column is greater than a preset number-of-words threshold; or
determining that the index type is a bitmap index if the number of words in the column is not greater than a preset number-of-words threshold, a Join does not occur, and the column is a discontinuous value type.

Preferably, the method further includes:
dividing a retrieval expression sent by a user into a plurality of subexpressions when the retrieval expression is received;
querying whether a retrieval result corresponding to each subexpression exists in a cache; and
generating, according to a retrieval result corresponding to the subexpression and retrieval results of other subexpressions, a retrieval response to be returned to the user if the retrieval result exists; or
performing retrieval on the subexpression by using an index of the column if a retrieval result corresponding to the subexpression does not exist, and storing the retrieval result in the cache after a retrieval response to be returned to the user is generated according to the retrieval result and retrieval results of other subexpressions.

Before the step of determining, according to the index status information of a column in a database within a preset time threshold, whether an index needs to be established for the column, the method further includes:
constructing an index for each column in the database according to a default index type after the database has been initialized, and constructing an index for each column again when a preset moment is reached.

Correspondingly, the present application further provides an index establishment device according to claim 4.

Preferably, the establishment module is further configured to determine, after the time threshold and according to index use status information of the column within the time threshold, whether an index needs to be established for the column when the determination module determines that an index does not need to be established for the column.

The determination module is specifically configured to:
acquire the index status information of the column within the time threshold;
determine, according to the index status information, whether an index is used for the column within the time threshold, and when the determination result is yes, determine whether the number of times an index for the column is used within the time threshold is not less than a preset number-of-times threshold; and
determine that an index does not need to be established for the column if an index is not used for the column within the time threshold or the number of times an index for the column is used within the time threshold is less than the number-of-times threshold; or
determine that an index needs to be established for the column if the number of times an index for the column is used within the time threshold is not less than the number-of-times threshold.

The index types at least include a B-Tree index, a Hash index, and a Bitmap index, and the establishment module configured to determine an index type according to the data information of the column specifically:
determines that the index type is a B-Tree index if the column is a continuous value type;
determines that the index type is a Hash index if a Join occurs in the column; and
determines that the index type is an inverted index if the number of words in the column is greater than a preset number-of-words threshold; or
determines that the index type is a bitmap index if the number of words in the column is not greater than a preset number-of-words threshold, a Join does not occur, and the column is a discontinuous value type.

Preferably, the device further includes:
a division module configured to divide a retrieval expression sent by a user into a plurality of subexpressions when the retrieval expression is received;
a query module configured to query whether a retrieval result corresponding to each subexpression exists in a cache; and
a processing module configured to generate, according to a retrieval result corresponding to the subexpression and retrieval results of other subexpressions, a retrieval response to be returned to the user when the retrieval result exists, or perform retrieval on the subexpression by using an index of the column when a retrieval result corresponding to the subexpression does not exist, and store the retrieval result in the cache after a retrieval response to be returned to the user is generated according to the retrieval result and retrieval results of other subexpressions.

The device further includes:
an initialization module configured to construct an index for each column in the database according to a default index type after the database has been initialized, and construct an index for each column again when a preset moment is reached.

As can be seen, by applying the technical solution in the present application, it is first determined, according to the index status information of a column in a database within a preset time threshold, whether an index needs to be established for the column, and an index type is determined according to the data information of the column and an index is established for the column according to the index type when it is determined that an index needs to be established for the column. Therefore, an index can be dynamically established for each column in a database, and a suitable index type can be selected according to the actual case, so that data retrieval efficiency can be effectively improved under the premise of reducing resource consumption and labor input.

### Brief Description of the Drawings

FIG. 1 is a schematic flowchart of an index establishment method according to the present application;
FIG. 2 is a schematic diagram of a data structure in a specific embodiment of the present application;
FIG. 3 is a schematic flowchart of streamed result merging according to the present application;
FIG. 4 is a schematic structural diagram of an index according to the present application;
FIG. 5 is a schematic flowchart of establishing an index according to the invention; and
FIG. 6 is a schematic structural diagram of an index establishment device according to the present application.

### Detailed Description

In view of the problem in the Background Art, the present application provides an index establishment method. It is promptly determined, according to the index use status of each column in a database, whether an index needs to be established for the column, and a suitable index type is selected in light of the data information of the column during the establishment of an index. Therefore, the retrieval efficiency is improved under the premise of saving hardware resources and reducing labor input.

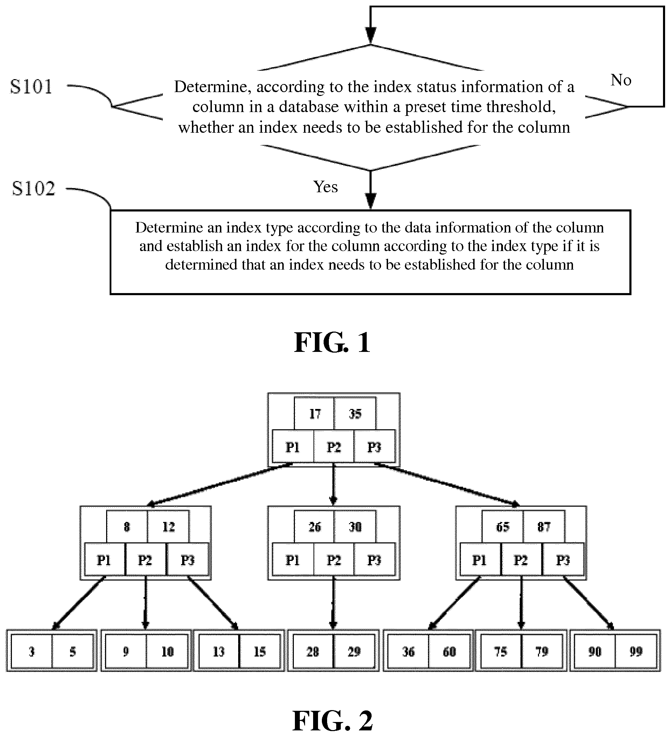

FIG. 1 is a schematic flowchart of an index establishment method according to the present application. The method includes the following steps:
S101: It is determined, according to the index status information of a column in a database within a preset time threshold, whether an index needs to be established for the column.

Step S102 is performed if it is determined that an index needs to be established for the column.

The process returns to step S 101 if it is determined that an index does not need to be established for the column, to continue to determine, within a time interval corresponding to the next preset time threshold, whether an index needs to be established for the column.

If there is a massive amount of data, because a user does not often retrieve or query all columns, it is time consuming and labor consuming and is unnecessary to establish an index for each column in a database. Therefore, in the present application, index status information is introduced for each column in a database. It is determined, based on index status information within a period of time, whether an index needs to be established for the column. Meanwhile, to ensure that index status information of each column can be promptly adjusted according to the retrieval manners and habits of the user, in the present application, after each time threshold, the index status information of each column is updated, and it is determined, for example, whether an index has been used for the column within the time threshold and whether the number of times the index has been used reaches a particular number. In a specific application scenario, the time threshold is specifically a preset time interval value representing a statistics-collection time range for collecting statistics on the index use status of a corresponding column. The time threshold may be adjusted according to the capacity of the database and the number of users. Generally, the time threshold may be set to one day, and a technical person may extend or shorten the time threshold based on this. These time thresholds all fall within the protection scope of the present application.

In a preferred embodiment of the present application, a specific determination manner is provided for this step, and it includes the following steps:
Step a): The index status information of the column within the time threshold is acquired.
Step b): It is determined, according to the index status information, whether an index is used for the column within the time threshold, and when the determination result is yes, it is determined whether the number of times an index for the column is used within the time threshold is not less than a preset number-of-times threshold.

Based on the foregoing determination step, it is determined that an index does not need to be established for the column if an index is not used for the column within the time threshold or the number of times an index for the column is used within the time threshold is less than the number-of-times threshold; or it is determined that an index needs to be established for the column if the number of times an index for the column is used within the time threshold is not less than the number-of-times threshold.

It should be noted that although, in the foregoing embodiment, specific steps and determination bases are used to determine whether an index needs to be established for a column, based on this, those skilled in the art may perform determination by using another type of basis. These improvements all fall within the protection scope of the present application.

In addition, after the database has been initialized, at this point, none of the columns in the database has an established index. In this case, an index is constructed for each column in the database according to a default index type in the present application, and an index is constructed for each column again when a preset moment is reached. Indexes that are uniformly established in this process may be preset by a technical person.

S102: An index type is determined according to the data information of the column, and an index is established for the column according to the index type.

An index type can be determined according to the data information of the column after it is determined by using S101 that an index needs to be established for the column. Therefore, personalized retrieval services can be provided to users based on different cases, so that the average time of querying a current database by all users is greatly reduced.

In contrast, as described in step S101, if it is determined that an index does not need to be established for the column, in the technical solution of the present application, after the time interval corresponding to a current time threshold ends, it is determined again, according to the index use status information of the column within the time interval corresponding to the next time threshold, whether an index needs to be established for the column. That is, step S101 is performed again. Therefore, flexible adjustment can be made according to the actual case.

Currently, commonly used index types include the Inverted index, B-Tree index, Hash index, and Bitmap index. Therefore, according to the present invention, an index type is specifically determined by using the following conditions:
(1) It is determined that the index type is a B-Tree index if the column is a continuous value type.
(2) It is determined that the index type is a Hash index if a Join occurs in the column.
   It should be noted that a Join is one of the important operations in a relational database system. Common Joins in an SQL Server include the inner join, outer join, cross join, and the like. If matching data of a row in one table and a row in another table needs to be acquired from two or more tables, the use of a Join operation needs to be considered, as a Join is characterized by joining tables or functions to perform a query.
(3) It is determined that the index type is an inverted index if the number of words in the column is greater than a preset number-of-words threshold.
   Here, the number of words in the column is specifically the number of variable values included in the column.
(4) It is determined that the index type is a bitmap index if the number of words in the column is not greater than a preset number-of-words threshold, a Join does not occur, and the column is a discontinuous value type.

In a specific embodiment of the present application, if data in a column is a value type and is continuous (for example, a monetary amount), generally speaking, only a range query needs to be performed on such a value type field. In the diagram of a data structure in FIG. 2, an intermediate node in the data structure of a B-Tree inherently has a range attribute. Therefore, for a column of a continuous value type, the efficiency of a range search on a B-Tree index is far higher than that of a range search on an inverted index and a bitmap index.

In addition, it is assumed that there are n records in an entire index slice, field A has x different term values, and the compression ratio of an original compression algorithm of "delta+vint" is p. In this case, the following result may be obtained by using a transform equation "x<128*p" of "x*n/32<n*4*p" and "the maximum compression ratio of the compression algorithm of "delta+vint" is 1/4":
when p=1/4, x<128*1/4=32 may be obtained by substituting "x<128*p".

As can be seen from the foregoing result, if the number of words is less than 32, the space occupied when a bitmap index is used is smaller than that occupied when an inverted index is used. Therefore, in the foregoing preferred embodiment, the number-of-words threshold may be specifically set to 32. However, it should also be pointed out that the number-of-words threshold may be subsequently changed based on another algorithm. This does not affect the protection scope of the present application.

In addition, after one user query is made in the prior art, no result information related to the query is saved. Generally, a user's query expression is usually formed of a plurality of different subexpressions. Therefore, if no atomic subexpression is cached in a conventional database, subexpression query results cannot be reused for different SQLs having the same expression. As a result, when no atomic subexpression is cached, the performance of Boolean operations in any dimensions in online analytical processing (OLAP) is poor. This being the case, a preferred embodiment of the present application provides a solution, in which a retrieval expression sent by a user is divided into a plurality of subexpressions when the retrieval expression is received, and it is queried whether a retrieval result corresponding to each subexpression exists in a cache. The processing is based on the following cases:
(1) a retrieval response to be returned to the user is generated according to a retrieval result corresponding to the subexpression and retrieval results of other subexpressions if the retrieval result exists; or
(2) retrieval is performed on the subexpression by using an index of the column if a retrieval result corresponding to the subexpression does not exist, and the retrieval result is stored in the cache after a retrieval response to be returned to the user is generated according to the retrieval result and retrieval results of other subexpressions.

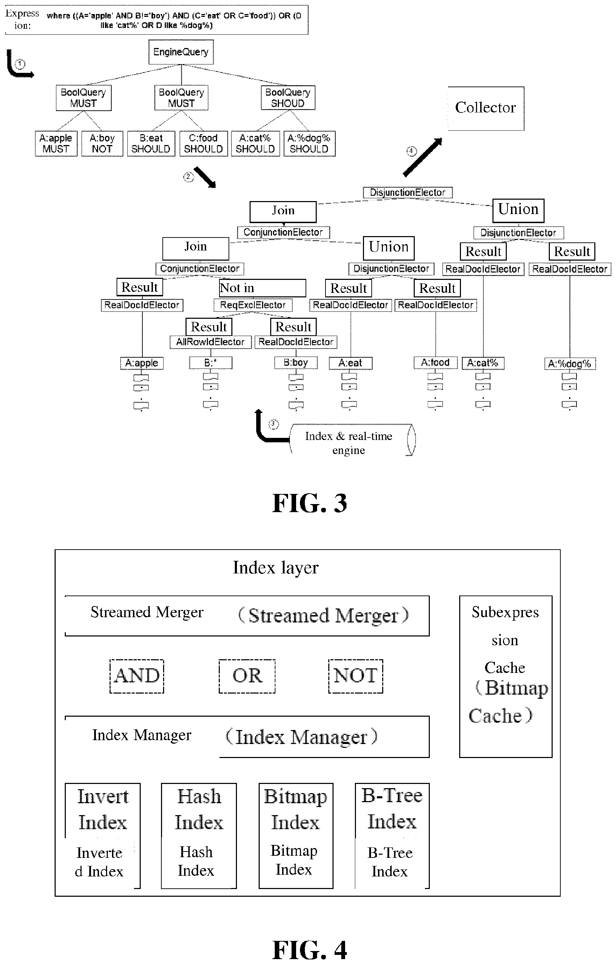

A schematic flowchart of streamed result merging in FIG. 3 is used as an example. An inverted link obtained through decompression after an index is queried is stored in the memory by using a bitmap structure. In this streamed merging framework, Boolean operations between expressions are obtained one by one through merging under the premise of not generating any intermediate objects. The entire streamed merging process includes the following four parts:
(1) A Query Builder (a queue creation component) generates an Engine Query (queue engine) object tree according to a where expression.
(2) A Rowid Selector tree is constructed according to the Engine Query object tree.
(3) A Rowid Set is obtained from different indexes and is inserted on a leaf node, and an intermediate node is a logic operational merger.
(4) Selection is performed from root nodes one by one, and a Rowid is collected.

The specific embodiment is based on a case in which different SQL statements may have the same where subexpression. Therefore, an atomic subexpression is cached to accelerate index query performance.

By applying the foregoing technical solution, based on an index structure that is independent on a column level, the most suitable index type is automatically selected according to costs and expenses, history statistics (HBO) are used to automatically adjust the index type, and at the same time an atomic subexpression is cached. Therefore, index query performance is accelerated while storage costs are reduced.

To further illustrate the technical concept of the present invention, a structural diagram of an index in FIG. 4 is used to describe the technical solution in the present invention. In the specific embodiment, the column-level index architecture shown in FIG. 4 is autonomously implemented based on the principles and characteristics of indexes such as an inverted index, bitmap index, Hash index, and B-Tree index, and all four index types can be supported. The index types are transparent to a user and do not need to be specified externally by the user. Instead, an index type is automatically selected according to data features. Moreover, the multiple index types use the same data structure to perform Boolean operations. The index from which a where subexpression result is found does not need to be perceived on an engine layer. In addition, an index may be automatically optimized according to history statistics information without needing manual involvement.

Specifically, the structural diagram of the index mainly includes the following three parts:
(1) A Streamed Merger is responsible for unifying query results of different indexes and interaction between computation layers. Results from queries using different indexes are stored by using a bitmap, a streamed merge tree is then generated according to Boolean operations of a where expression, and the merger then outputs row numbers that satisfy a where condition, one by one.
(2) An Index Manager is responsible for index management, type selection, and automatic index optimization procedures.
(3) A subexpression cache (a Bitmap Cache) is responsible for caching where subexpressions. As such, an index no longer needs to be queried when different SQLs have the same subexpression, and a query may be directly made in the cache.

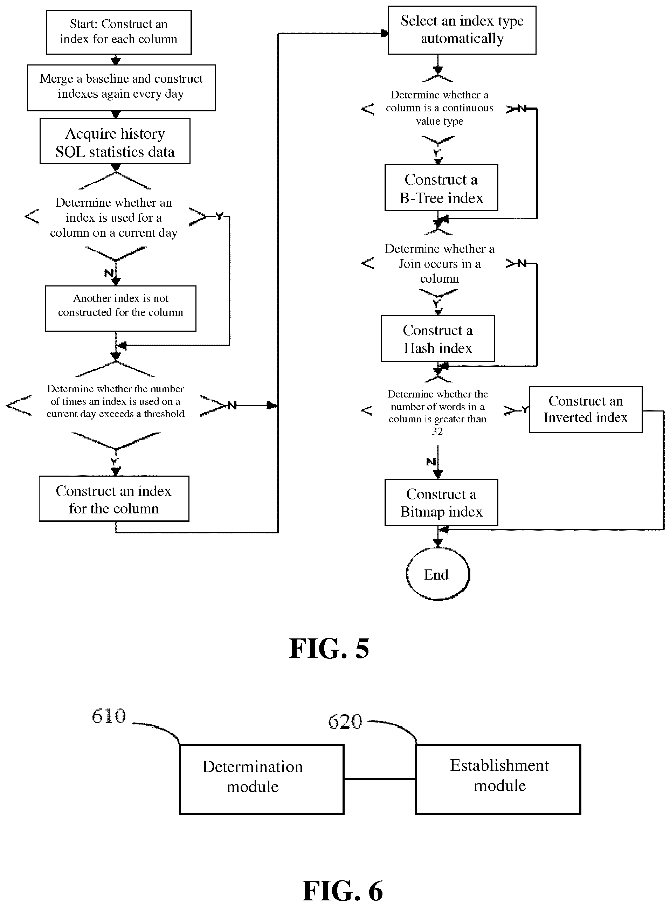

Based on the foregoing description, in a schematic flowchart of establishing an index in FIG. 5, an index is first established for each column in a database, and every day an index is established again and history SQL statistics data is acquired. It is determined, based on the history data, whether an index is used for the column on the current day and whether the number of times the index is used exceeds a threshold. A different index type is selected according to the type of data in the column after it is determined that an index needs to be established for the column. Therefore, not only does it support the use of different index types (an inverted index, a B-Tree index, a Bitmap index, and a Hash index are all supported) for fields in different columns, but also an index type is selected without being perceived by a user, so that storage costs are greatly saved and query speed is greatly increased.

To achieve the foregoing technical objective, the present application further provides an index establishment device. As shown in FIG. 6, the device includes:
a determination module 610 configured to determine, according to the index status information of a column in a database within a preset time threshold, whether an index needs to be established for the column; and
an establishment module 620 configured to determine an index type according to the data information of the column and establish an index for the column according to the index type when the determination module determines that an index needs to be established for the column.

In a specific application scenario, the establishment module is further configured to determine, after the time threshold and according to index use status information of the column within the time threshold, whether an index needs to be established for the column when the determination module determines that an index does not need to be established for the column.

In a specific application scenario, the determination module is specifically configured to:
acquire the index status information of the column within the time threshold;
determine, according to the index status information, whether an index is used for the column within the time threshold, and when the determination result is yes, determine whether the number of times an index for the column is used within the time threshold is not less than a preset number-of-times threshold; and
determine that an index does not need to be established for the column if an index is not used for the column within the time threshold or the number of times an index for the column is used within the time threshold is less than the number-of-times threshold; or
determine that an index needs to be established for the column if the number of times an index for the column is used within the time threshold is not less than the number-of-times threshold.

The index types at least include a B-Tree index, a Hash index, and a Bitmap index, and the establishment module configured to determine an index type according to the data information of the column specifically:
determines that the index type is a B-Tree index if the column is a continuous value type;
determines that the index type is a Hash index if a join occurs in the column; and
determines that the index type is an inverted index if the number of words in the column is greater than a preset number-of-words threshold; or
determines that the index type is a bitmap index if the number of words in the column is not greater than a preset number-of-words threshold, a Join does not occur, and the column is a discontinuous value type.

In a specific application scenario, the device further includes:
a division module configured to divide a retrieval expression sent by a user into a plurality of subexpressions when the retrieval expression is received;
a query module configured to query whether a retrieval result corresponding to each subexpression exists in a cache; and
a processing module configured to generate, according to a retrieval result corresponding to the subexpression and retrieval results of other subexpressions, a retrieval response to be returned to the user when the retrieval result exists, or perform retrieval on the subexpression by using an index of the column when a retrieval result corresponding to the subexpression does not exist, and store the retrieval result in the cache after a retrieval response to be returned to the user is generated according to the retrieval result and retrieval results of other subexpressions.

Tthe device further includes:
an initialization module configured to construct an index for each column in the database according to a default index type after the database has been initialized, and construct an index for each column again when a preset moment is reached.

By applying the technical solution in the present application, it is first determined, according to the index status information of a column in a database within a preset time threshold, whether an index needs to be established for the column, and an index type is determined according to the data information of the column and an index is established for the column according to the index type when it is determined that an index needs to be established. Therefore, an index can be dynamically established for each column in a database, and a suitable index type can be selected according to the actual case, so that data retrieval efficiency can be effectively improved under the premise of reducing resource consumption and labor input.

As can be known from this description of implementation manners, those skilled in the art may clearly understand that the present invention may be implemented by using software or software plus a necessary universal hardware platform. Based on such an understanding, the technical solutions of the present invention may be implemented in the form of a software product. The software product may be stored in a non-volatile storage medium (which may be a CD-ROM, a USB flash drive, a removable hard disk, or the like), and includes several instructions for instructing a computer device (which may be a personal computer, a server, a network device, or the like) to perform the methods in the implementation scenarios of the present invention.

Those skilled in the art may understand that the accompanying drawings are only schematic diagrams of a preferred implementation scenario. The modules or procedures in the accompanying drawings are not necessarily indispensable for implementing the present invention.

Those skilled in the art may understand that the modules in the apparatus in the implementation scenario may be distributed in the apparatus in the implementation scenario according to the description of the implementation scenario, or may be correspondingly changed to be located in one or more apparatuses different from the apparatus in the implementation scenario. The modules in the foregoing implementation scenario may be combined into one module or may further be divided into a plurality of submodules.

The foregoing sequence numbers in the present invention are merely for the convenience of description, and do not imply preference among the implementation scenarios.
The foregoing disclosure is only several specific implementation scenarios of the present invention.

## Claims

1. An index establishment method, comprising:
constructing a default index on each column in a database according to a default index type;
determining, according to index use status information of the default index for each column in the database within a preset time threshold, whether a specific index is to be established for each column, wherein the determining comprises:
acquiring the index use status information of each column within the preset time threshold;
determining, for each one of the columns in the database, according to the index use status information, whether a given default index has been used for each one of the columns within the preset time threshold;
if, for a given column, a default index has been used within the preset time threshold, determining whether a number of times the default index for the given column has been used within the preset time threshold is not less than a preset number-of-times threshold; and
in response to determining that the default index has not been used for a given column within the preset time threshold, or the number of times the default index for the given column has been used within the preset time threshold is less than the number-of-times threshold, determining that a specific index does not need to be established for the given column; or
in response to determining that the number of times the default index for a given column has been used within the preset time threshold is not less than the number-of-times threshold, determining that a specific index is to be established for the given column;
determining an index type for each column for which a specific index is to be established according to the type of data in each given column, wherein the index type comprises any one of a B-tree index, a hash index, an inverted index, and a bitmap index; and determining the index type according to the type of data in the given column comprises:
determining that the index type is the B-tree index in response to the column being a continuous value type;
determining that the index type is the hash index in response to a join occurring on the given column;
determining that the index type is the inverted index in response to a number of words in the given column being greater than a preset number-of-words threshold; or
determining that the index type is the bitmap index in response to the number of words in the given column being not greater than the preset number-of-words threshold, a join not occurring, and the given column being the discontinuous value type;
establishing the specific index for the column according to the index type in response to determining that a specific index is to be established for the column; and wherein
a different index type is established for each column for which a specific index is to be established when the columns comprise different data types.

2. The method of claim 1, further comprising:
in response to determining that a specific index is not to be established for a given column, determining, after the preset time threshold expires and according to the index use status information of the given column within a next preset time threshold, whether the specific index needs to be established for the given column.

3. The method of any of claims 1 to 2, further comprising:
receiving a retrieval expression;
dividing the retrieval expression into a plurality of subexpressions;
querying whether a retrieval result corresponding to each subexpression in the plurality of subexpressions exists in a cache; and
generating a retrieval response to be returned to the user according to the retrieval results of the plurality of subexpressions, wherein generating comprises:
generating the retrieval response to be returned to the user, according to a retrieval result corresponding to a subexpression and retrieval results of other subexpressions in response to the retrieval result existing in the cache; or
performing retrieval on a subexpression by using an index of a column to retrieve the retrieval result in response to the retrieval result corresponding to the subexpression not existing in the cache, storing the retrieval result in correspondence with the subexpression in the cache, and generating the retrieval response to be returned to the user according to the retrieved retrieval result and retrieval results of other subexpressions.

4. An index establishment device, comprising:
an initialization module configured to initialize the database and construct a default index for each column in the database according to a default index type;
a determination module (610) configured to determine, according to index use status information of each column in a database within a preset time threshold, whether a specific index is to be established for each column, wherein the index type comprises any one of a B-tree index, a hash index, an inverted index, and a bitmap index, wherein the determination module (610) is further configured to:
acquire the index use status information of each column within the preset time threshold;
determine, for each one of the columns in the database, according to the index use status information, whether the default index has been used for each one of the columns within the preset time threshold;
when, for a given column, it is determined that the default index has been used within the preset time threshold, determine whether a number of times the default index for the given column has been used within the preset time threshold is not less than a preset number-of-times threshold;
when, for a given column, it is determined that the default index has not been used within the preset time threshold, or the number of times the default index for the given column has been used within the preset time threshold is less than the number-of-times threshold, determine that a specific index does not need to be established for the given column; and
when, for a given column, it is determined that the number of times the default index has been used within the preset time threshold is not less than the number-of-times threshold, determine that a specific index is to be established for the given column; and
an establishment module (620) configured to determine the index type for each column for which a specific index is to be established according to the type of data in a column by:
determining that the index type is the B-tree index when the given column is a continuous value type;
determining that the index type is the hash index when a join occurs on the given column;
determining that the index type is the inverted index when a number of words in the given column is greater than a preset number-of-words threshold; or
determining that the index type is the bitmap index when the number of words in the given column is not greater than the preset number-of-words threshold, a join does not occur, and the given column is the discontinuous value type;
the establishment module (620) is configured to establish the specific index for the column according to the index type when the determination module determines that a specific index is to be established for the column; and wherein
a different index type is established for each column when the columns comprise different data types.

5. The device of claim 4, wherein the establishment module (620) is further configured to determine, when the determination module (610) determines that a specific index does not need to be established for a column and after the time preset threshold expires, according to the index use status information of the column within a next preset time threshold, whether the specific index is to be established for the column.

6. The device of any of claims 4 to 5, further comprising:
a division module configured to retrieve a retrieval expression and divide the retrieval expression into a plurality of subexpressions;
a query module configured to query whether a retrieval result corresponding to each subexpression exists in a cache; and
a processing module configured to generate a retrieval response to be returned to the user according to the retrieval results of the plurality of subexpressions by:
generating the retrieval response to be returned to the user, according to a retrieval result corresponding to a subexpression and retrieval results of other subexpressions when the retrieval result exists in the cache, or
performing retrieval on the subexpression by using the index of the column to retrieve the retrieval result when the retrieval result corresponding to the subexpression does not exist, storing the retrieval result in correspondence with the subexpression in the cache, and generating the retrieval response to be returned to the user according to the retrieved retrieval result and retrieval results of other subexpressions.

7. A computer-readable medium storing instructions which, when executed by at least one processor of a computing system, cause the computing system to perform the index establishment method of any of claims 1 to 3.

## Patentansprüche

1. Indexfestlegungsverfahren, umfassend:
Anlegen eines Standardindex für jede Spalte in einer Datenbank gemäß einem Standardindextyp;
Bestimmen, gemäß Statusinformationen zur Indexverwendung des Standardindex für jede Spalte in der Datenbank innerhalb einer voreingestellten Zeitschwelle, ob ein spezifischer Index für jede Spalte erzeugt werden soll, wobei das Bestimmen umfasst:
Erfassen der Statusinformationen zur Indexverwendung jeder Spalte innerhalb der voreingestellten Zeitschwelle;
Bestimmen, für jede der Spalten in der Datenbank gemäß der Statusinformationen zur Indexverwendung, ob ein vorgegebener Standardindex für jede der Spalten innerhalb der voreingestellten Zeitschwelle verwendet wurde;
wenn für eine vorgegebene Spalte ein Standardindex innerhalb der voreingestellten Zeitschwelle verwendet wurde, Bestimmen, ob eine Anzahl von Male, welche der Standardindex für die vorgegebene Spalte innerhalb der voreingestellten Zeitschwelle verwendet wurde, nicht kleiner als eine voreingestellte Anzahl-von-Male-Schwelle ist; und
als Reaktion auf Bestimmen, dass der Standardindex innerhalb der voreingestellten Zeitschwelle nicht für eine vorgegebene Spalte verwendet wurde, oder die Anzahl von Male, welche der Standardindex für die vorgegebene Spalte innerhalb der voreingestellten Zeitschwelle verwendet wurde, weniger als die Anzahl-von-Male-Schwelle ist, Bestimmen, dass ein spezifischer Index für die vorgegebene Spalte nicht erzeugt werden muss; oder als Reaktion auf Bestimmen, dass die Anzahl von Male, welche der Standardindex für eine vorgegebene Spalte innerhalb der voreingestellten Zeitschwelle verwendet wurde, nicht kleiner als die Anzahl-von-Male-Schwelle ist, Bestimmen, dass ein spezifischer Index für die vorgegebene Spalte erzeugt werden soll;
Bestimmen eines Indextyps für jede Spalte, für welche ein spezifischer Index gemäß dem Typ der Daten in jeder vorgegebenen Spalte erzeugt werden soll, wobei der Indextyp jeden von einem B-Baum-Index, einem Hash-Index, einem invertierten Index und einem Bitmap-Index umfasst;
und Bestimmen des Indextyps gemäß dem Typ der Daten in der vorgegebenen Spalte umfasst:
Bestimmen, dass der Indextyp der B-Baum-Index ist, als Reaktion darauf, dass die Spalte ein wertkontiunierlicher Typ ist;
Bestimmen, dass der Indextyp der Hash-Index ist, als Reaktion darauf, dass ein Verbinden in der vorgegebenen Spalte auftritt;
Bestimmen, dass der Indextyp der invertierte Index ist, als Reaktion darauf, dass eine Anzahl von Wörtern in der vorgegebenen Spalte größer ist als eine voreingestellt Anzahl-von-Wörtern-Schwelle; oder
Bestimmen, dass der Indextyp der Bitmap-Index ist, als Reaktion darauf, dass die Anzahl von Wörtern in der vorgegebenen Spalte nicht größer ist als die voreingestellt Anzahl-von-Wörtern-Schwelle, kein Verbinden auftritt und die vorgegebene Spalte der wertdiskontinuierliche Typ ist;
Erzeugen des spezifischen Index für die Spalte gemäß dem Indextyp als Reaktion auf Bestimmen, dass ein spezifischer Index für die Spalte erzeugt werden soll;
und wobei
ein unterschiedlicher Indextyp für jede Spalte erzeugt wird, für welche ein spezifischer Index erzeugt werden soll, wenn die Spalten unterschiedliche Datentypen umfassen.

2. Verfahren nach Anspruch 1, weiter umfassend:
als Reaktion auf Bestimmen, dass ein spezifischer Index für eine vorgegebene Spalte nicht erzeugt werden soll, nachdem die voreingestellte Zeitschwelle abläuft und gemäß den Statusinformationen zur Indexverwendung der vorgegebenen Spalte, Bestimmen innerhalb einer nächsten voreingestellten Zeitschwelle, ob der spezifische Index für die vorgegebene Spalte erzeugt werden muss.

3. Verfahren nach einem der Ansprüche 1 bis 2, weiter umfassend:
Empfangen eines Abrufausdrucks;
Unterteilen des Abrufausdrucks in eine Vielzahl von Teilausdrücken;
Abfragen, ob ein Abrufergebnis, welches jeweils einem Teilausdruck in der Vielzahl von Teilausdrücken entspricht, in einem Cache vorhanden ist; und
Generieren einer Abrufantwort, welche zurück an den Benutzer gesendet werden soll, gemäß des Abrufergebnissen der Vielzahl von Teilausdrücken, wobei Generieren umfasst:
Generieren der Abrufantwort, welche zurück an den Benutzer gesendet werden soll, gemäß einem Abrufergebnis, welches einem Teilausdruck und Abrufergebnissen anderer Teilausdrücke entspricht, als Reaktion darauf, dass das Abrufergebnis in dem Cache vorhanden ist; oder
Ausführen von Abrufen für einen Teilausdruck unter Verwendung eines Index einer Spalte, um das Abrufergebnis abzurufen, als Reaktion darauf, dass das Abrufergebnis, welches dem Teilausdruck entspricht, nicht in dem Cache vorhanden ist, Speichern des Abrufergebnisses in Übereinstimmung mit dem Teilausdruck in dem Cache, und Generieren der Abrufantwort, welche zurück an den Benutzer gesendet werden soll, gemäß dem abgerufenen Abrufergebnis und Abrufergebnissen anderer Teilausdrücke.

4. Indexfestlegungsvorrichtung, umfassend:
ein Initialisierungsmodul, welches dazu konfiguriert ist, die Datenbank zu initialisieren und einen Standardindex für jede Spalte in der Datenbank gemäß einem Standardindextyp anzulegen;
ein Bestimmungsmodul (610), welches dazu konfiguriert ist, gemäß Statusinformationen zur Indexverwendung jeder Spalte in einer Datenbank innerhalb einer voreingestellten Zeitschwelle zu bestimmen, ob ein spezifischer Index für jede Spalte erzeugt werden soll, wobei der Indextyp jeden von einem B-Baum-Index, einem Hash-Index, einem invertierten Index und einem Bitmap-Index umfasst, wobei das Bestimmungsmodul (610) weiter dazu konfiguriert ist:
die Statusinformationen zur Indexverwendung jeder Spalte innerhalb der voreingestellten Zeitschwelle zu erfassen;
für jede einzelne der Spalten in der Datenbank gemäß der Statusinformationen zur Indexverwendung zu bestimmen, ob der Standardindex für jede einzelne der Spalten innerhalb der voreingestellten Zeitschwelle verwendet wurde;
wenn für eine vorgegebene Spalte bestimmt wird, dass der Standardindex innerhalb der voreingestellten Zeitschwelle verwendet wurde, zu bestimmen, ob eine Anzahl von Male, welche der Standardindex für die vorgegebene Spalte innerhalb der voreingestellten Zeitschwelle verwendet wurde, nicht kleiner als eine voreingestellte Anzahl-von-Male-Schwelle ist;
wenn für eine vorgegebene Spalte bestimmt wird, dass der Standardindex innerhalb der voreingestellten Zeitschwelle nicht verwendet wurde, oder die Anzahl von Male, welche der Standardindex für die vorgegebene Spalte innerhalb der voreingestellten Zeitschwelle verwendet wurde, kleiner als die Anzahl-von-Male-Schwelle ist, zu bestimmen, dass ein spezifischer Index für die vorgegebene Spalte nicht erzeugt werden muss; und
wenn für eine vorgegebene Spalte bestimmt wird, dass die Anzahl von Male, welche der Standardindex innerhalb der voreingestellten Zeitschwelle verwendet wurde, nicht kleiner als die Anzahl-von-Male-Schwelle ist, zu bestimmen, dass ein spezifischer Index für die vorgegebene Spalte erzeugt werden soll; und
ein Erzeugungsmodul (620), welches dazu konfiguriert ist, den Indextyp für jede Spalte, für welche ein spezifischer Index erzeugt werden soll, gemäß dem Typ der Daten zu bestimmen durch:
Bestimmen, dass der Indextyp der B-Baum-Index ist, wenn die vorgegebene Spalte ein wertkontinuierlicher Typ ist;
Bestimmen, dass der Indextyp der Hash-Index ist, wenn in der vorgegebenen Spalte ein Verbinden auftritt;
Bestimmen, dass der Indextyp der invertierte Index ist, wenn eine Anzahl von Wörtern in der vorgegebenen Spalte größer ist als eine voreingestellt Anzahl-von-Wörtern-Schwelle; oder
Bestimmen, dass der Indextyp der Bitmap-Index ist, wenn die Anzahl von Wörtern in der vorgegebenen Spalte nicht größer ist als die voreingestellt Anzahl-von-Wörtern-Schwelle, kein Verbinden auftritt und die vorgegebene Spalte der wertdiskontinuierliche Typ ist;
wobei das Erzeugungsmodul (620) dazu konfiguriert ist, den spezifischen Index für die Spalte gemäß dem Indextyp zu bestimmen, wenn das Bestimmungsmodul bestimmt, dass ein spezifischer Index für die Spalte erzeugt werden soll; und wobei
ein unterschiedlicher Indextyp für jede Spalte erzeugt wird, wenn die Spalten unterschiedliche Datentypen umfassen.

5. Vorrichtung nach Anspruch 4, wobei das Erzeugungsmodul (620) weiter dazu konfiguriert ist, wenn das Bestimmungsmodul (610) bestimmt, dass ein spezifischer Index für eine Spalte nicht erzeugt werden muss, und nachdem die voreingestellte Zeitschwelle abläuft, gemäß den Statusinformationen zur Indexverwendung der vorgegebenen Spalte innerhalb einer nächsten voreingestellten Zeitschwelle, zu bestimmen, ob der spezifische Index für die Spalte erzeugt werden soll.

6. Vorrichtung nach einem der Ansprüche 4 bis 5, weiter umfassend:
ein Unterteilungsmodul, welches dazu konfiguriert ist, einen Abrufausdruck abzurufen und den Abrufausdruck in eine Vielzahl von Teilausdrücke zu unterteilen;
ein Abfragemodul, welches dazu konfiguriert ist, abzufragen, ob ein Abrufergebnis, welches jeweils einem Teilausdruck entspricht, in einem Cache vorhanden ist;
und
ein Verarbeitungsmodul, welches dazu konfiguriert ist, eine Abrufantwort, welche zurück an den Benutzer gesendet werden soll, gemäß den Abrufergebnissen der Vielzahl von Teilausdrücken zu generieren durch:
Generieren der Abrufantwort, welche zurück an den Benutzer gesendet werden soll, gemäß einem Abrufergebnis, welches einem Teilausdruck entspricht, und Abrufergebnissen anderer Teilausdrücke, wenn das Abrufergebnis in dem Cache vorhanden ist; oder
Ausführen von Abrufen für den Teilausdruck unter Verwendung des Index einer Spalte, um das Abrufergebnis abzurufen, wenn das Abrufergebnis, welches dem Teilausdruck entspricht, nicht vorhanden ist, Speichern des Abrufergebnisses in Übereinstimmung mit dem Teilausdruck in dem Cache, und Generieren der Abrufantwort, welche zurück an den Benutzer gesendet werden soll, gemäß dem abgerufenen Abrufergebnis und Abrufergebnissen anderer Teilausdrücke.

7. Computerlesbares Medium, welches Anweisungen speichert, welche bei Ausführung durch zumindest einen Prozessor eines Datenverarbeitungssystems das Datenverarbeitungssystem veranlassen, das Indexfestlegungsverfahren nach einem der Ansprüche 1 bis 3 auszuführen.

## Revendications

1. Procédé d'établissement d'index, comprenant :
la construction d'un index par défaut sur chaque colonne dans une base de données selon un type d'index par défaut ;
le fait de déterminer, selon les informations d'état d'utilisation d'index de l'index par défaut pour chaque colonne de la base de données dans un seuil de temps prédéfini, si un index spécifique doit être établi pour chaque colonne, dans lequel la détermination comprend :
l'acquisition des informations d'état d'utilisation d'index de chaque colonne dans le seuil de temps prédéfini ;
le fait de déterminer, pour chacune des colonnes de la base de données, selon les informations d'état d'utilisation d'index, si un index par défaut donné a été utilisé pour chacune des colonnes dans le seuil de temps prédéfini ;
si, pour une colonne donnée, un index par défaut a été utilisé pendant le seuil de temps prédéfini, la le fait de déterminer si le nombre de fois où l'index par défaut pour la colonne donnée a été utilisé pendant le seuil de temps prédéfini n'est pas inférieur à un seuil de nombre de fois prédéfini ; et
en réponse à la détermination que l'index par défaut n'a pas été utilisé pour une colonne donnée dans le seuil de temps prédéfini, ou que le nombre de fois que l'index par défaut pour la colonne donnée a été utilisé dans le seuil de temps prédéfini est inférieur au seuil de nombre fois, la détermination qu'un index spécifique n'a pas besoin d'être établi pour la colonne donnée ; ou
en réponse à la détermination du fait que le nombre de fois que l'index par défaut pour une colonne donnée a été utilisé pendant le seuil de temps prédéfini n'est pas inférieur au seuil de nombre de fois, la détermination qu'un index spécifique doit être établi pour la colonne donnée ;
la détermination d'un type d'index pour chaque colonne pour laquelle un index spécifique doit être établi en fonction du type de données dans chaque colonne donnée, dans lequel le type d'index comprenant l'un quelconque parmi un index arbre B, un index de hachage, un index inversé, et un index bitmap ; et la détermination du type d'index en fonction du type de données dans la colonne donnée comprend :
la détermination que le type d'index est l'index arbre B en réponse au fait que la colonne est un type valeur continue ;
la détermination que le type d'index est l'index de hachage en réponse à une jointure apparaissant sur la colonne donnée ;
la détermination que le type d'index est l'index inversé en réponse au fait qu'un nombre de mots dans la colonne donnée est supérieur à un seuil de nombre de mots prédéfini ; ou
la détermination que le type d'index est l'index bitmap en réponse au fait que le nombre de mots dans la colonne donnée n'est pas supérieur au seuil de nombre de mots prédéfini, qu'une jointure ne se produit pas et que la colonne donnée est de type valeur discontinue ;
l'établissement de l'index spécifique pour la colonne selon le type d'index en réponse à la détermination du fait qu'un index spécifique doit être établi pour la colonne ; et dans lequel
un type d'index différent est établi pour chaque colonne pour laquelle un index spécifique doit être établi lorsque les colonnes comprennent des types de données différents.

2. Procédé selon la revendication 1, comprenant en outre :
en réponse à la détermination du fait qu'un index spécifique ne doit pas être établi pour une colonne donnée, la fait de déterminer, après l'expiration du seuil de temps prédéfini et selon les informations d'état d'utilisation d'index de la colonne donnée dans un seuil de temps prédéfini suivant, si l'index spécifique a besoin d'être établi pour la colonne donnée.

3. Procédé selon l'une quelconque des revendications 1 à 2, comprenant en outre :
la réception d'une expression de récupération ;
la division de l'expression de récupération en une pluralité de sous-expressions ;
le fait de demander si un résultat de récupération correspondant à chaque sous-expression dans la pluralité de sous-expressions existe dans un cache ; et
la génération d'une réponse de récupération à renvoyer à l'utilisateur en fonction des résultats de récupération de la pluralité de sous-expressions, dans lequel la génération comprend :
la génération de la réponse de récupération à renvoyer à l'utilisateur, en fonction d'un résultat de récupération correspondant à une sous-expression et aux résultats de récupération d'autres sous-expressions en réponse au résultat de récupération existant dans le cache ; ou
l'exécution d'une récupération sur une sous-expression en utilisant un index d'une colonne pour récupérer le résultat de récupération en réponse au résultat de récupération correspondant à la sous-expression n'existant pas dans le cache, le stockage du résultat de récupération correspondant à la sous-expression dans le cache, et la génération de la réponse de la récupération à renvoyer à l'utilisateur en fonction du résultat de récupération récupéré et des résultats de récupération d'autres sous-expressions.

4. Dispositif d'établissement d'index, comprenant :
un module d'initialisation configuré pour initialiser la base de données et construire un index par défaut pour chaque colonne dans la base de données selon un type d'index par défaut ;
un module de détermination (610) configuré pour déterminer, selon les informations d'état d'utilisation d'index de chaque colonne dans une base de données dans un seuil de temps prédéfini, si un index spécifique doit être établi pour chaque colonne, dans lequel le type d'index comprend l'un quelconque parmi un index arbre B, un index de hachage, un index inversé et un index bitmap, dans lequel le module de détermination (610) est en outre configuré pour :
acquérir les informations d'état d'utilisation d'index de chaque colonne dans le seuil de temps prédéfini ;
déterminer, pour chacune des colonnes de la base de données, selon les informations d'état d'utilisation d'index, si l'index par défaut a été utilisé pour chacune des colonnes dans le seuil de temps prédéfini ;
lorsque, pour une colonne donnée, il est déterminé que l'index par défaut a été utilisé pendant le seuil de temps prédéfini, déterminer si le nombre de fois où l'index par défaut pour la colonne donnée a été utilisé pendant le seuil de temps prédéfini n'est pas inférieur à un seuil de nombre de fois prédéfini ;
lorsque, pour une colonne donnée, il est déterminé que l'index par défaut n'a pas été utilisé dans le seuil de temps prédéfini, ou que le nombre de fois que l'index par défaut pour la colonne donnée a été utilisé dans le seuil de temps prédéfini est inférieur au seuil de nombre de fois, déterminer qu'un index spécifique n'a pas besoin d'être établi pour la colonne donnée ; et
lorsque, pour une colonne donnée, il est déterminé que le nombre de fois que l'index par défaut a été utilisé dans le seuil de temps prédéfini n'est pas inférieur au seuil de nombre de fois, déterminer qu'un index spécifique doit être établi pour la colonne donnée ; et un module d'établissement (620) configuré pour déterminer le type d'index pour chaque colonne pour laquelle un index spécifique doit être établi en fonction du type de données dans une colonne par :
la détermination que le type d'index est l'index arbre B lorsque la colonne donnée est un type valeur continue ;
la détermination que le type d'index est l'index de hachage lorsqu'une jointure apparait sur la colonne donnée ;
la détermination que le type d'index est l'index inversé lorsqu'un nombre de mots dans la colonne donnée est supérieur à un seuil de nombre de mots prédéfini ; ou
la détermination que le type d'index est l'index bitmap lorsque le nombre de mots dans la colonne donnée n'est pas supérieur au seuil de nombre de mots prédéfini,
qu'une jointure ne se produit pas et que la colonne donnée est de type valeur discontinue ;
le module d'établissement (620) est configuré pour établir l'index spécifique pour la colonne selon le type d'index lorsque le module de détermination détermine qu'un index spécifique doit être établi pour la colonne ;
et dans lequel
un type d'index différent est établi pour chaque colonne lorsque les colonnes comprennent des types de données différents.

5. Dispositif selon la revendication 4, dans lequel le module d'établissement (620) est en outre configuré pour déterminer, lorsque le module de détermination (610) détermine qu'un index spécifique n'a pas besoin d'être établi pour une colonne et après l'expiration du seuil de temps prédéfini, selon les informations d'état d'utilisation d'index de la colonne dans un seuil de temps prédéfini suivant, si l'index spécifique doit être établi pour la colonne.

6. Dispositif selon l'une quelconque des revendications 4 à 5, comprenant en outre :
un module de division configuré pour récupérer une expression de récupération et diviser l'expression de récupération en une pluralité de sous-expressions ;
un module de requête configuré pour demander si un résultat de récupération correspondant à chaque sous-expression existe dans un cache ; et
un module de traitement configuré pour générer une réponse de récupération à renvoyer à l'utilisateur en fonction des résultats de récupération de la pluralité de sous-expressions par :
la génération de la réponse de récupération à renvoyer à l'utilisateur, selon un résultat de récupération correspondant à une sous-expression et aux résultats de récupération d'autres sous-expressions lorsque le résultat de récupération existe dans le cache, ou
l'exécution d'une récupération sur la sous-expression en utilisant l'index de la colonne pour récupérer le résultat de récupération lorsque le résultat de récupération correspondant à la sous-expression n'existe pas, le stockage du résultat de récupération correspondant à la sous-expression dans le cache, et la génération de la réponse de la récupération à renvoyer à l'utilisateur en fonction du résultat de récupération récupéré et des résultats de récupération d'autres sous-expressions.

7. Support lisible par ordinateur stockant des instructions qui, lorsqu'elles sont exécutées par au moins un processeur d'un système informatique, amènent le système informatique à exécuter le procédé d'établissement d'index selon l'une quelconque des revendications 1 à 3.
